# EUROPEAN PATENT SPECIFICATION

(11) **EP 2 748 475 B1**
(45) Date of publication and mention of the grant of the patent: **09.12.2015**
(21) Application number: 12748118.2
(22) Date of filing: 09.08.2012
(51) Int. Cl.: F16C 17/10, F16C 43/02

(54) **BUSHING ASSEMBLY AND METHOD OF ASSEMBLING SAME**
BUCHSENANORDNUNG UND MONTAGEVERFAHREN DAFÜR
ENSEMBLE BAGUE ET SON PROCÉDÉ D'ASSEMBLAGE

(30) Priority: 12.09.2011 US 201113230309
(43) Date of publication of application: 02.07.2014
(73) Proprietor: The Boeing Company, Chicago, IL 60606-2016 (US)
(72) Inventor: AHERN, Rebecca Elizabeth, Renton, Washington 98508 (US); NEWBOLT, Christopher L., Seattle, Washington 98121 (US); IRWIN, James P., Renton, Washington 98059 (US); CORONADO, Peter A., Renton, Washington 98059 (US); JOHNSON, Benjamin A., Lynnwood, Washington 98087 (US)
(74) Representative: Lloyd, Robin
(86) International application number: PCT/US2012/050115
(87) International publication number: WO 2013/039618

(56) References cited:
- WO-A1-2007/113157
- DE-A1- 2 108 358
- US-A- 5 174 170

## Description

### FIELD OF THE DISCLOSURE

The present disclosure relates generally to bushings and, more particularly, to bushing systems that include a bushing component and a separate flange.

### BACKGROUND

At least some known bushings, such as some known shape-memory bushings, are installed by expanding the bushing within an opening. For example, to install such shape-memory bushings, heat and/or other energy is applied to transform the bushing from a strained, martensitic state to a shaped, austenitic state. During the transformation, the bushing expands radially outward to fill the opening and thus becomes coupled within the opening in an interference fit. Generally, the expansion is reversible by applying energy that is opposite to the originally applied energy. For example, if heat was used to secure the bushing within an opening, the bushing can generally be removed from the opening when significantly cooled using liquid nitrogen or some other cooling source.

At least some applications, however, require more complex bushings that include additional features and/or characteristics, such as flanges. Depending on their use, at least some known flanged bushings are installed using shrink-fit technology and/or using brute force applied by, for example, a mandrel. As can be appreciated, such installation methods, however, may damage the bushing and/or the structure in which the bushing is being installed, thus resulting in a defective installation. As such, the use of shape-memory bushings may be limited. Moreover, shape-memory technology is generally not used to install flanged bushings because different parts of such bushings generally expand at different rates.

Therefore, it would be advantageous to have a method and apparatus that takes into account at least some of the issues discussed above, as well as possibly other issues.

US5174170 describes a device for controlling the position and movement of a cable comprising a tubular member with a flange.

DE2108358 describes a flange bearing formed by applying a washer on a body. WO2007113157 describes a plain bearing having a bearing housing, wherein the bearing housing may be formed of a shape memory alloy.

### SUMMARY

In one aspect, a bushing assembly is provided according to claim 1.

In another aspect, a bushing is provided for use with a washer including an opening defined therethrough. The bushing includes a cylindrical body including a first end that is sized to be inserted within the washer opening and an opposite second end. The cylindrical body is fabricated from a smart material that is configured to selectively expand when at least a portion of the body is positioned within the washer opening.

In yet another aspect, a method is provided for assembling a bushing assembly according to claim 8.

In yet another aspect, there is provided a bushing assembly comprising: a washer comprising an opening defined therethrough; and a cylindrical body comprising a first end that is sized to be inserted within the washer opening and an opposite second end, the cylindrical body fabricated from a smart material that is configured to selectively expand when at least a portion of the body is positioned within the washer opening; wherein the cylindrical body is configured to be secured within the washer opening in an interference fit; wherein the washer further comprises an inner surface formed with a first configuration, and the cylindrical body first end further comprises an outer surface formed with a second configuration that is substantially complementary to the first configuration; wherein the washer further comprises a plurality of notches spaced circumferentially about the washer opening, and the first end of the cylindrical body further comprises a plurality of projections that are sized and oriented to fit within the plurality of notches; wherein the washer further comprises a recessed inner rim extending circumferentially about the washer opening, and the first end of the cylindrical body comprises a lip that is sized and oriented to fit within the recessed inner rim such that an upper surface of the cylindrical body is substantially flush with an upper surface of the washer when at least the portion of the cylindrical body is fully inserted within the washer opening; wherein the body is fabricated from a smart material comprising at least one of a shape-memory alloy and a shape-memory polymer; and further comprising a seal disposed between the washer and the cylindrical body.

In yet another aspect, there is provided a method of assembling a bushing assembly, the method comprising: positioning a first end of a cylindrical body within an opening defined by a washer, the cylindrical body fabricated from a smart material that is configured to selectively expand; and expanding the cylindrical body when the cylindrical body first end is positioned within the washer opening; wherein expanding the cylindrical body further comprises expanding the cylindrical body such that the cylindrical body is secured within the washer opening in an interference fit; wherein positioning a first end of a cylindrical body further comprises aligning the first end within the washer opening, the washer including an inner surface formed with a first configuration, the first end including an outer surface formed with a second configuration that is substantially complementary to the first configuration; wherein positioning a first end of a cylindrical body further comprises aligning the first end within the washer opening, the washer including a plurality of notches spaced circumferentially about the washer opening, the first end including a plurality of projections that are sized and oriented to fit within the plurality of notches; and, wherein positioning a first end of a cylindrical body further comprises positioning a lip of the first end within a recessed inner rim of the washer extending circumferentially about the washer opening such that an upper surface of the cylindrical body is substantially flush with an upper surface of the washer when the cylindrical body first end is fully inserted within the washer opening; and further comprising positioning a seal between the cylindrical body and the washer.

The features, functions, and advantages described herein may be achieved independently in various embodiments of the present disclosure or may be combined in yet other embodiments, further details of which may be seen with reference to the following description and drawings.

### BRIEF DESCRIPTION OF THE DRAWINGS

FIG. 1 is a side view of an exemplary bushing assembly;
FIG. 2 is a bottom perspective view of the bushing assembly shown in FIG. 1;
FIG. 3 is a side view of an exemplary flange component that may be used with the bushing assembly shown in FIG. 1;
FIG. 4 is a top perspective view of the flange component shown in FIG. 3;
FIG. 5 is a side view of an exemplary bushing component that may be used with the bushing assembly shown in FIG. 1;
FIG. 6 is a bottom perspective view of the bushing component shown in FIG. 5; and
FIG. 7 is a flowchart of an exemplary method that may be implemented to assemble the bushing assembly shown in FIG. 1.

Although specific features of various embodiments may be shown in some drawings and not in others, this is for convenience only. Any feature of any drawing may be referenced and/or claimed in combination with any feature of any other drawing.

### DETAILED DESCRIPTION

The subject matter described herein relates generally to bushings and, more particularly, to bushing systems that include a bushing component and a separate flange component. In one embodiment, the flange component is a washer that includes an opening defined therethrough and the bushing component is a cylindrical body that has a first end that is sized to fit within the washer opening. The cylindrical body is fabricated from a smart material that is configured to expand. As such, the bushing component and/or the flange component are predictably expandable, thus enabling shape-memory technology to be used for bushing installation applications.

As used herein, a "smart material" refers to a material that has one or more properties that is selectively changeable using an external stimuli including, without limitation, stress, temperature, moisture, pH, electric field, and/or magnetic field. As used herein, a "shape-memory material" refers to a material that has a shape that is selectively changeable using an external stimuli including, without limitation, stress, temperature, moisture, pH, electric field, and/or magnetic field.

As used herein, an element or step recited in the singular and proceeded with the word "a" or "an" should be understood as not excluding plural elements or steps unless such exclusion is explicitly recited. Moreover, references to "one embodiment" of the present invention and/or the "exemplary embodiment" are not intended to be interpreted as excluding the existence of additional embodiments that also incorporate the recited features.

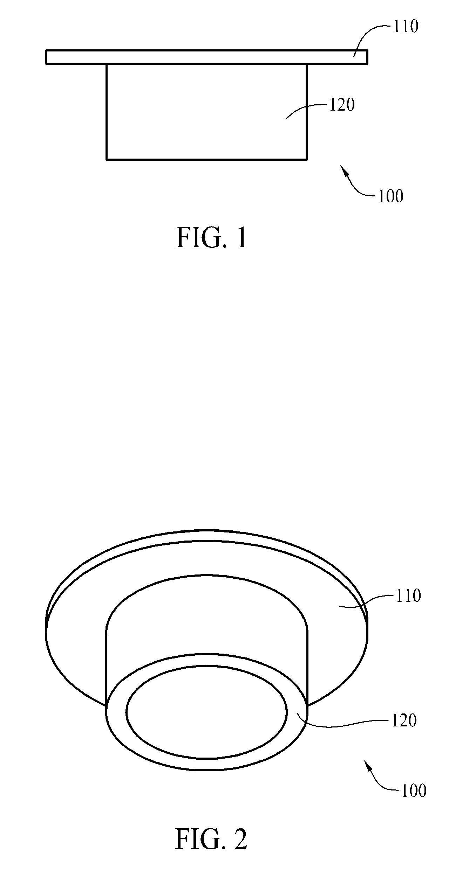

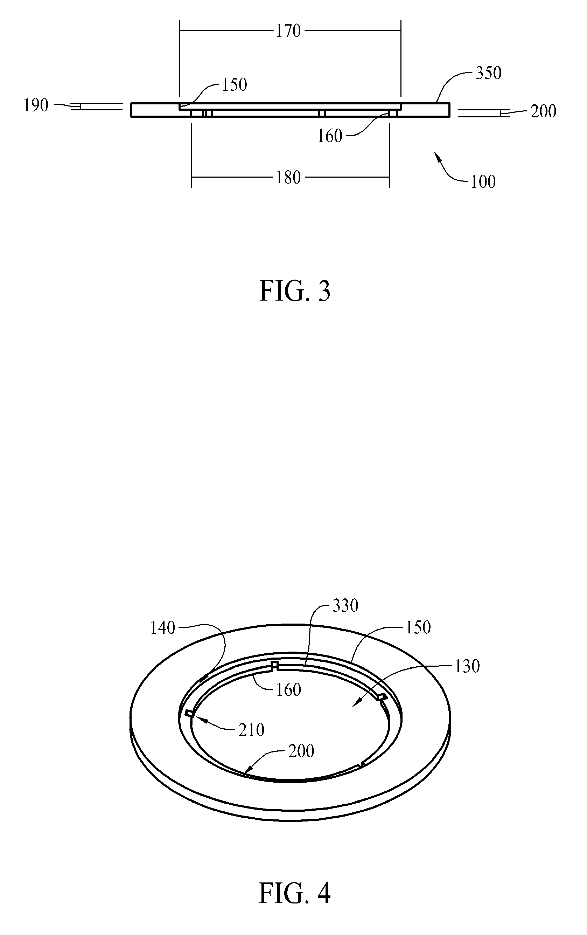

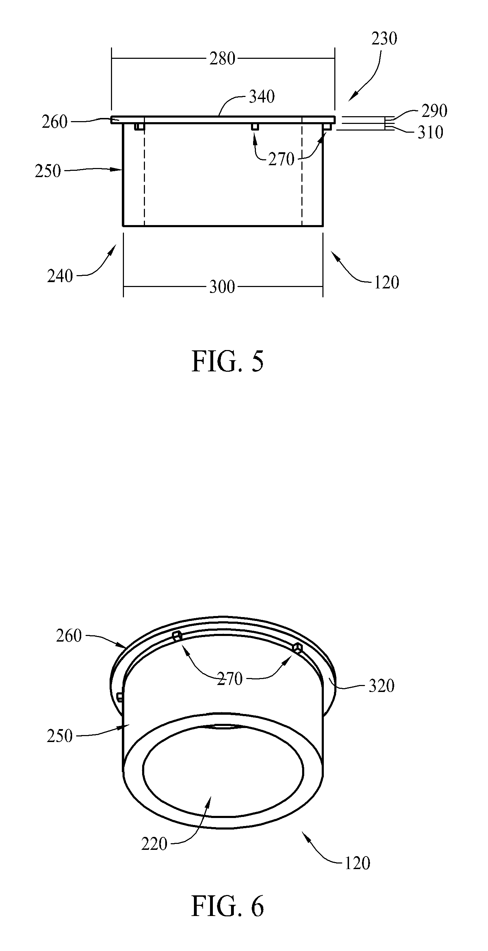

FIGS. 1 and 2 each illustrate an exemplary bushing assembly 100 that includes a flange component or washer 110, and a bushing component or body 120, coupled to washer 110. FIGS. 3 and 4 illustrate washer 110. FIGS. 5 and 6 illustrate body 120. In the exemplary embodiment, washer 110 is a substantially planar disk that includes an opening 130 defined therethrough. In the exemplary embodiment, opening 130 is sized to receive at least a portion of body 120 therein. More specifically, in the exemplary embodiment, washer 110 has an inner surface 140 that defines opening 130. In the exemplary embodiment, inner surface 140 has a tiered or first configuration that facilitates securing washer 110 to body 120. More specifically, in the exemplary embodiment, inner surface 140 includes an upper portion 150 that is formed with an upper inner diameter 170, and a lower portion 160 that is formed with a lower inner diameter 180 that is smaller than upper inner diameter 170. Accordingly, in the exemplary embodiment, lower portion 160 is a recessed inner rim that extends circumferentially about opening 130.

In the exemplary embodiment, upper portion 150 is formed with an upper portion height 190, and lower portion 160 is formed with a lower portion height 200. Moreover, in the exemplary embodiment, upper portion 150 is substantially cylindrical and is defined by a continuous smooth wall, and lower portion 160 is formed with a continuous wall that includes a plurality of notches 210 that are spaced circumferentially about opening 130. Alternatively, inner surface 140 may have any other configuration that enables bushing assembly 100 to function as described herein.

In the exemplary embodiment, body 120 is substantially cylindrical and includes a bore 220 defined therethrough. In the exemplary embodiment, body 120 has a first end 230 that is sized to fit within opening 130 and a second end 240 that is opposite first end 230. Moreover, in the exemplary embodiment, first end 230 has an outer surface 250 that has a tiered or second configuration that enables washer 110 to be securely coupled to body 120. More specifically, in the exemplary embodiment, first end 230 includes a lip 260 that is substantially complementary to upper portion 150, and a plurality of projections 270 that extend radially outwards from body 120 and that are substantially complementary to lower portion 160 or, more particularly, notches 210. That is, at least a portion of outer surface 250 substantially mates against inner surface 140 when body 120 is fully inserted within opening 130. In the exemplary embodiment, lip 260 has a lip outer diameter 280 that is slightly smaller than upper inner diameter 170. Moreover, lip 260 is formed with a lip height 290 that is approximately the same as upper portion 150. In the exemplary embodiment, body 120 is formed with a body outer diameter 300 that is slightly smaller than lower inner diameter 180. Moreover, in the exemplary embodiment, projections 270 are sized, shaped, and/or oriented to mate with notches 210. More specifically, in the exemplary embodiment, projections 270 are formed with a projection height 310 that is approximately the same height as lower portion height 200. Alternatively, outer surface 250 may have any other configuration that enables bushing assembly 100 to function as described herein including, without limitation, a square or rectangle-shaped projection, a pyramidal shaped projection, a wedge-shaped projection, a rounded projection, and/or an irregular-shaped projection.

In the exemplary embodiment, body 120 is fabricated from a smart material that enables body 120 or, more particularly, first end 230 to selectively expand. The smart material may include, without limitation, a shape-memory alloy and/or a shape-memory polymer. In the exemplary embodiment, washer 110 is fabricated from a material that is compatible with the smart material used to fabricate body 120, such as, but not limited to, a carbon loaded polymeric material. For example, in the exemplary embodiment, the materials used to fabricate washer 110 and/or body 120 are substantially resistant to corrosion and/or electrostatic charge buildup. Alternatively, body 120 and/or washer 110 may be fabricated from any material or combination of materials that enables bushing assembly 100 to function as described herein.

Washer 110 and/or body 120 are configured to fit such that, when assembled, washer 110 and/or body 120 do not rotate with respect to each other. For example, in an alternative embodiment, an interference fit is formed between washer 110 and first end 230 with a suitable force such that washer 110 and/or body 120 do not include any notches 210 and/or projections 270. Additionally or alternatively, washer 110 and/or body 120 may have, without limitation, a polygonal shape, a square shape, and/or an oval shape. Washer 110 and/or body 120 may have any size, shape, and/or configuration that enables bushing assembly 100 to function as described herein.

During assembly of bushing assembly 100, second end 240 is inserted into opening 130, and body 120 is moved axially and/or rotated until first end 230 engages opening 130. More specifically, projections 270 are positioned in a tight tolerance within notches 210, and a lower surface 320 of lip 260 is positioned against an upper surface 330 of lower portion 160. Moreover, when body 120 is fully inserted in positioned relative to washer 110, an upper surface 340 of lip 260 is substantially flush with an upper surface 350 of upper portion 150.

In the exemplary embodiment, body 120 or, more particularly, first end 230 is expanded within opening 130 such that an interference fit is formed between washer 110 and first end 230. More specifically, in the exemplary embodiment, heat and/or other energy is applied to body 120 to facilitate transforming first end 230 from a strained, martensitic state to a shaped, austenitic state. During the transformation, first end 230 expands to fill opening 130 and become secured in opening 130 in an interference fit. Additionally, the expansion is reversible by applying energy that is opposite the originally applied energy, such as cooling through liquid nitrogen. Additionally or alternatively, a seal (not shown) may be positioned between washer 110 and body 120 such that a washer-body interface is substantially fluid tight. In such an embodiment, bushing assembly 100 may be suitable for use in a fuel application and/or a hydraulic application.

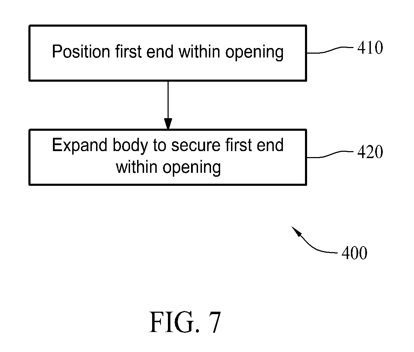

FIG. 7 is a flowchart of an exemplary method 400 that may be implemented to assemble bushing assembly 100. In the exemplary embodiment, first end 230 of body 120 is positioned 410 within opening 130 defined in washer 110. More specifically, in the exemplary embodiment, projections 270 are positioned substantially within notches 210 to facilitate aligning outer surface 250 with inner surface 140. Moreover, in the exemplary embodiment, lip 260 is positioned against lower portion 160 to fully insert body 120 within opening 130. More specifically, in the exemplary embodiment, upper surface 340 of lip 260 is substantially flush with upper surface 350 of upper portion 150 to facilitate fully inserting body 120 within opening 130. In at least some embodiments, a seal is positioned between washer 110 and body 120 such that a washer-body interface is substantially fluid tight.

As described in more detail above, in the exemplary embodiment, body 120 is fabricated from a smart material that is selectively expandable. In the exemplary embodiment, body 120 is expanded 420 to facilitate securing first end 230 within opening 130. More particularly, in the exemplary embodiment, body 120 is expanded 420 to secure first end 230 within opening 130 in an interference fit.

The subject matter described herein relates generally to bushings and, more particularly, to a bushing system including a bushing component and a separate flange component. The embodiments described herein enable benefits associated with both shape-memory bushings and flanged-bushings to be achieved. For example, the embodiments described herein enable increasing an opening's tolerance, increasing an ease of repair and/or replacement and/or decreasing damage to a structure in which the bushing assembly is installed.

Exemplary embodiments of systems and methods for using shape-memory bushings with flange features are described above in detail.

This written description uses examples to disclose the embodiments, including the best mode, and also to enable any person skilled in the art to practice the embodiments, including making and using any devices or systems and performing any incorporated methods. The patentable scope of the disclosure is defined by the claims, and may include other examples that occur to those skilled in the art.

## Claims

1. A bushing assembly comprising:
a washer (110) comprising an opening (130) defined therethrough; and
a cylindrical body (120) comprising a first end that is sized to be inserted within the washer opening (130) and an opposite second end, said cylindrical body fabricated from a smart material configured to transform from a strained martensitic state to a shaped, austenitic state by applying heat and/or other energy, and to selectively expand when at least a portion of said body (120) is positioned within the washer opening (130).

2. A bushing assembly in accordance with Claim 1, wherein said cylindrical body (120) is configured to be secured within the washer opening (130) in an interference fit.

3. A bushing assembly in accordance with Claim 1 or 2, wherein said washer (110) further comprises an inner surface (140) formed with a first configuration, and said cylindrical body (120) first end further comprises an outer surface (250) formed with a second configuration that is substantially complementary to the first configuration.

4. A bushing assembly in according with any preceding claim, wherein said washer (110) further comprises a plurality of notches (210) spaced circumferentially about the washer opening (130), and said first end of said cylindrical body (120) further comprises a plurality of projections (270) that are sized and oriented to fit within the plurality of notches (210).

5. A bushing assembly in accordance with any preceding claim, wherein said washer (110) further comprises a recessed inner rim (150) extending circumferentially about the washer opening (130), and said first end of said cylindrical body (120) comprises a lip that is sized and oriented to fit within the recessed inner rim such that an upper surface of said cylindrical body (120) is substantially flush with an upper surface of said washer (110) when at least said portion of said cylindrical body (120) is fully inserted within the washer opening (130).

6. A bushing assembly in accordance with any preceding claim, wherein said body (120) is fabricated from a smart material comprising a shape-memory alloy.

7. A bushing assembly in accordance with any preceding claim further comprising a seal disposed between said washer and said cylindrical body.

8. A method of assembling a bushing assembly, said method comprising:
positioning a first end of a cylindrical body (120) within an opening (130) defined by a washer (110), the cylindrical body (120) fabricated from a smart material configured to transform from a strained martensitic state to a shaped, austenitic state by applying heat and/or other energy and to selectively expand; and
expanding the cylindrical body (120) when the cylindrical body first end is positioned within the washer opening (130).

9. A method in accordance with Claim 8, wherein expanding the cylindrical body (120) further comprises expanding the cylindrical body (120) such that the cylindrical body is secured within the washer opening (130) in an interference fit.

10. A method in accordance with Claim 8 or 9, wherein positioning a first end of a cylindrical body (120) further comprises aligning the first end within the washer opening (130), the washer (110) including an inner surface (140) formed with a first configuration, the first end including an outer surface formed with a second configuration that is substantially complementary to the first configuration.

11. A method in accordance with any of Claims 8 to 10, wherein positioning a first end of a cylindrical body (120) further comprises aligning the first end within the washer opening (130), the washer (110) including a plurality of notches (210) spaced circumferentially about the washer opening (130), the first end including a plurality of projections (270) that are sized and oriented to fit within the plurality of notches (210).

12. A method in accordance with any of Claims 8 to 11, wherein positioning a first end of a cylindrical body (120) further comprises positioning a lip of the first end within a recessed inner rim (150) of the washer (110) extending circumferentially about the washer opening (130) such that an upper surface of the cylindrical body (120) is substantially flush with an upper surface of the washer (130) when the cylindrical body first end is fully inserted within the washer opening (130).

13. A method in accordance with any of Claims 8 to 12 further comprising positioning a seal between the cylindrical body (120) and the washer (110).

## Patentansprüche

1. Buchsenanordnung mit:
einer Beilagscheibe (110) mit einer durch sie hindurch definierten Öffnung (130); und
einem zylindrischen Körper (120), der ein erstes Ende hat, welches dimensioniert ist, in der Öffnung (130) der Beilagscheibe einsetzt zu werden, und ein gegenüberliegendes zweites Ende, wobei der zylindrische Körper aus einem intelligenten Material gebildet ist, das dazu konfiguriert ist, sich bei Aufbringen von Wärme und/oder anderer Energie von einem gespannten martensitischen Zustand in einen geformten austenitischen Zustand umzuwandeln, und sich selektiv auszudehnen, wenn wenigstens ein Abschnitt des Körpers (120) in der Öffnung (130) der Beilagscheibe positioniert ist.

2. Buchsenanordnung nach Anspruch 1, wobei der zylindrische Körper (120) dazu konfiguriert ist, in der Öffnung (130) der Beilagscheibe festsitzend gesichert zu werden.

3. Buchsenanordnung nach Anspruch 1 oder 2, wobei die Beilagscheibe (110) des Weiteren eine Innenfläche (140) aufweist, die mit einer ersten Konfiguration ausgebildet ist, und wobei das erste Ende des zylindrischen Körpers (120) des Weiteren eine Außenfläche (250) aufweist, die mit einer zweiten Konfiguration ausgebildet ist, welche im Wesentlichen zu der ersten Konfiguration komplementär ist.

4. Buchsenanordnung nach einem der vorhergehenden Ansprüche, wobei die Beilagscheibe (110) des Weiteren eine Vielzahl von Kerben (210) aufweist, die umfangsmäßig um die Öffnung (130) der Beilagscheibe beabstandet sind, und wobei das erste Ende des zylindrischen Körpers (120) des Weiteren eine Vielzahl von Vorsprüngen (270) aufweist, die dazu dimensioniert und ausgerichtet sind, in die Vielzahl von Kerben (210) zu passen.

5. Buchsenanordnung nach einem der vorhergehenden Ansprüche, wobei die Beilagscheibe (110) des Weiteren einen vertieften Innenrand (150) aufweist, der sich umfangsmäßig um die Öffnung (130) der Beilagscheibe erstreckt, und wobei das erste Ende des zylindrischen Körpers (120) eine Lippe aufweist, die dimensioniert und ausgerichtet ist, in den vertieften Innenrand zu passen, so dass eine obere Fläche des zylindrischen Körpers (120) mit einer oberen Fläche der Beilagscheibe (110) im Wesentlichen fluchtet, wenn wenigstens der Abschnitt des zylindrischen Körpers (120) vollständig in die Öffnung (130) der Beilagscheibe eingeführt ist.

6. Buchsenanordnung nach einem der vorhergehenden Ansprüche, wobei der Körper (120) aus einem intelligenten Material, das eine Formgedächtnislegierung aufweist, hergestellt ist.

7. Buchsenanordnung nach einem der vorhergehenden Ansprüche, die des Weiteren eine Dichtung aufweist, welche zwischen der Beilagscheibe und dem zylindrischen Körper angeordnet ist.

8. Verfahren zum Zusammensetzen einer Buchsenanordnung, wobei das Verfahren umfasst:
Positionieren eines ersten Endes eines zylindrischen Körpers (120) in einer Öffnung (130), die durch eine Beilagscheibe (110) definiert ist, wobei der zylindrische Körper (120) aus einem intelligenten Material hergestellt ist, das konfiguriert ist, sich bei Aufbringen von Wärme und/oder anderer Energie von einem gespannten martensitischen Zustand in einen geformten austenitischen Zustand umzuwandeln, und sich selektiv auszudehnen; und
Ausdehnen des zylindrischen Körpers (120), wenn das erste Ende des zylindrischen Körpers in der Öffnung (130) der Beilagscheibe positioniert ist.

9. Verfahren nach Anspruch 8, wobei das Ausdehnen des zylindrischen Körpers (120) des Weiteren das Ausdehnen des zylindrischen Körpers (120) derart umfasst, dass der zylindrische Körper festsitzend in der Öffnung (130) der Beilagscheibe gesichert ist.

10. Verfahren nach Anspruch 8 oder 9, wobei das Positionieren eines ersten Endes eines zylindrischen Körpers (120) des Weiteren das Ausrichten des ersten Endes in der Öffnung (130) der Beilagscheibe umfasst, wobei die Beilagscheibe (110) eine Innenfläche (140) aufweist, die mit einer ersten Konfiguration ausgebildet ist, und das erste Ende eine Außenfläche aufweist, die mit einer zweiten Konfiguration ausgebildet ist, welche im Wesentlichen zu der ersten Konfiguration komplementär ist.

11. Verfahren nach einem der Ansprüche 8 bis 10, wobei das Positionieren eines ersten Endes eines zylindrischen Körpers (120) des Weiteren das Ausrichten des ersten Endes in der Öffnung (130) der Beilagscheibe umfasst, wobei die Beilagscheibe (110) eine Vielzahl von Kerben (210) aufweist, die umfangsmäßig um die Öffnung (130) der Beilagscheibe beabstandet sind, und das erste Ende eine Vielzahl von Vorsprüngen (270) aufweist, die dazu dimensioniert und ausgerichtet sind, in die Vielzahl von Kerben (210) zu passen.

12. Verfahren nach einem der Ansprüche 8 bis 11, wobei das Positionieren eines ersten Endes eines zylindrischen Körpers (120) des Weiteren das Positionieren einer Lippe des ersten Endes in einen vertieften Innenrand (150) der Beilagscheibe (110), der sich umfangsmäßig um die Öffnung (130) der Beilagscheibe erstreckt, umfasst, so dass eine obere Fläche des zylindrischen Körpers (120) mit einer oberen Fläche der Beilagscheibe (110) im Wesentlichen fluchtet, wenn das erste Ende des zylindrischen Körpers vollständig in die Öffnung (130) der Beilagscheibe eingeführt ist.

13. Verfahren nach einem der Ansprüche 8 bis 12, das des Weiteren das Anbringen einer Dichtung zwischen dem zylindrischen Körper (120) und der Beilagscheibe (110) umfasst.

## Revendications

1. Ensemble bague comprenant :
une rondelle (110) comprenant une ouverture (130) définie à travers celle-ci ; et
un corps cylindrique (120) comprenant une première extrémité qui est dimensionnée pour être introduite à l'intérieur de l'ouverture de rondelle (130) et une seconde extrémité opposée, ledit corps cylindrique étant fabriqué à partir d'un matériau intelligent configuré pour passer d'un état martensitique contraint à un état austénitique mis en forme, par application de chaleur et/ou d'une autre énergie, et pour se dilater de manière sélective lorsqu'au moins une partie dudit corps (120) est positionnée à l'intérieur de l'ouverture de rondelle (130).

2. Ensemble bague selon la revendication 1, dans lequel ledit corps cylindrique (120) est configuré pour être fixé à l'intérieur de l'ouverture de rondelle (130) avec ajustement serré.

3. Ensemble bague selon les revendications 1 ou 2, dans lequel ladite rondelle (110) comprend en outre une surface interne (140) formée avec une première configuration, et ladite première extrémité dudit corps cylindrique (120) comprend en outre une surface externe (250) formée avec une seconde configuration qui est sensiblement complémentaire de la première configuration.

4. Ensemble bague selon l'une quelconque des revendications précédentes, dans lequel ladite rondelle (110) comprend en outre une pluralité d'encoches (210) espacées de façon circonférentielle autour de l'ouverture de rondelle (130), et ladite première extrémité dudit corps cylindrique (120) comprend en outre une pluralité de saillies (270) qui sont dimensionnées et orientées pour s'adapter à l'intérieur de la pluralité d'encoches (210).

5. Ensemble bague selon l'une quelconque des revendications précédentes, dans lequel ladite rondelle (110) comprend en outre un rebord interne en retrait (150) s'étendant de façon circonférentielle autour de l'ouverture de rondelle (130), et ladite première extrémité dudit corps cylindrique (120) comprend une lèvre qui est dimensionnée et orientée pour s'adapter à l'intérieur du rebord interne en retrait, de telle sorte qu'une surface supérieure dudit corps cylindrique (120) est sensiblement alignée avec une surface supérieure de ladite rondelle (110) lorsqu'au moins ladite partie dudit corps cylindrique (120) est entièrement introduite à l'intérieur de l'ouverture de rondelle (130).

6. Ensemble bague selon l'une quelconque des revendications précédentes, dans lequel ledit corps (120) est fabriqué à partir d'un matériau intelligent comprenant un alliage à mémoire de forme.

7. Ensemble bague selon l'une quelconque des revendications précédentes, comprenant en outre un joint d'étanchéité disposé entre ladite rondelle et ledit corps cylindrique.

8. Procédé d'assemblage d'un ensemble bague, ledit procédé comprenant :
le positionnement d'une première extrémité d'un corps cylindrique (120) à l'intérieur d'une ouverture (130) définie par une rondelle (110), le corps cylindrique (120) étant fabriqué à partir d'un matériau intelligent configuré pour passer d'un état martensitique contraint à un état austénitique mis en forme, par application de chaleur et/ou d'une autre énergie, et pour se dilater de manière sélective ; et
la dilatation du corps cylindrique (120) lorsque la première extrémité du corps cylindrique est positionnée à l'intérieur de l'ouverture de rondelle (130).

9. Procédé selon la revendication 8, dans lequel la dilatation du corps cylindrique (120) comprend en outre la dilatation du corps cylindrique (120) de telle sorte que le corps cylindrique est fixé à l'intérieur de l'ouverture de rondelle (130) avec ajustement serré.

10. Procédé selon les revendications 8 ou 9, dans lequel le positionnement d'une première extrémité d'un corps cylindrique (120) comprend en outre l'alignement de la première extrémité à l'intérieur de l'ouverture de rondelle (130), la rondelle (110) comprenant une surface interne (140) formée avec une première configuration, la première extrémité comprenant une surface externe formée avec une seconde configuration qui est sensiblement complémentaire de la première configuration.

11. Procédé selon l'une quelconque des revendications 8 à 10, dans lequel le positionnement d'une première extrémité d'un corps cylindrique (120) comprend en outre l'alignement de la première extrémité à l'intérieur de l'ouverture de rondelle (130), la rondelle (110) comprenant une pluralité d'encoches (210) espacées de façon circonférentielle autour de l'ouverture de rondelle (130), la première extrémité comprenant une pluralité de saillies (270) qui sont dimensionnées et orientées pour s'adapter à l'intérieur de la pluralité d'encoches (210).

12. Procédé selon l'une quelconque des revendications 8 à 11, dans lequel le positionnement d'une première extrémité d'un corps cylindrique (120) comprend en outre le positionnement d'une lèvre de la première extrémité dans un rebord interne en retrait (150) de la rondelle (110) s'étendant de façon circonférentielle autour de l'ouverture de rondelle (130), de telle sorte qu'une surface supérieure du corps cylindrique (120) est sensiblement alignée avec une surface supérieure de la rondelle (130) lorsque la première extrémité du corps cylindrique est entièrement introduite à l'intérieur de l'ouverture de rondelle (130).

13. Procédé selon l'une quelconque des revendications 8 à 12, comprenant en outre le positionnement d'un joint d'étanchéité entre le corps cylindrique (120) et la rondelle (110).
